# EUROPÄISCHE PATENTSCHRIFT

(11) **EP 2 212 401 B1**
(45) Veröffentlichungstag und Bekanntmachung des Hinweises auf die Patenterteilung: **01.07.2015**
(21) Anmeldenummer: 08802865.9
(22) Anmeldetag: 11.10.2008
(51) Int. Cl.: C09K 11/02, C09K 11/80, C09K 11/59

(54) **VERFAHREN ZUR HERSTELLUNG VON BESCHICHTETEN LEUCHTSTOFFEN**
METHOD FOR THE PRODUCTION OF COATED LUMINESCENT SUBSTANCES
PROCÉDÉ DE FABRICATION DE SUBSTANCES LUMINEUSES REVÊTUES

(30) Priorität: 08.11.2007 DE 102007053285
(43) Veröffentlichungstag der Anmeldung: 04.08.2010
(73) Patentinhaber: Merck Patent GmbH, 64293 Darmstadt (DE)
(72) Erfinder: WINKLER, Holger, 64291 Darmstadt (DE); PETRY, Ralf, 64347 Griesheim (DE); RUEGER, Reinhold, 63322 Rödermark (DE); VOSGROENE, Tim, 64372 Ober-Ramstadt (DE)
(86) Internationale Anmeldenummer: PCT/EP2008/008608
(87) Internationale Veröffentlichungsnummer: WO 2009/059677

(56) Entgegenhaltungen:
- EP-A- 0 160 856
- WO-A-2007/064414
- US-A1- 2004 101 822
- US-A1- 2006 068 203

## Beschreibung

Die Erfindung betrifft beschichtete Leuchtstoffpartikel sowie ein Verfahren zur deren Herstellung.

Die Herstellung von Leuchtstoffen erfordert in der Regel einen nachgeschalteten Hochtemperaturprozess. Bei diesem Vorgang werden u.a. in der Leuchtstoffmatrix vorhandene kristallographische Fehlstellen ausgeheilt, um die für die Leuchtstoff-Performance wichtige Kristallgüte der Matrix zu maximieren.

Jedoch führt dieser Hochtemperaturprozess zwangsläufig zu einer Versinterung des Leuchtstoffkornes, falls dieser Prozess bei Temperaturen von mindestens 2/3 der Schmelztemperatur des Leuchtstoffes erfolgt. Durch die Versinterung kommt es zu einer ungünstigen Partikelmorphologie und Partikelgrößenverteilung des Leuchtstoffpulvers, welche in einem nachfolgenden Prozessschritt durch Energieeintrag (Mahlen) wieder in die Primärpartikel zurückgeführt werden muss.

Durch den Energieeintrag kommt es zu oberflächlichen Kristallschädigungen, wie beispielsweise Farbzentren, welche die Effizienz des Leuchtstoffes beeinträchtigen.

Überraschenderweise kann die Versinterung der Leuchtstoffpartikel während des Hochtemperaturprözesses dadurch vermieden werden, indem man die Leuchtstoffoberfläche über nasschemische Methoden mit kleinen Partikeln belegt, welche als Abstandhalter (oder Spacer genannt) zwischen den Partikeln wirken und auf diese Weise als Diffusionsbarriere für Sinterprozesse fungieren. Der Vorteil der erfindungsgemäßen Lösung besteht darin, dass die Korngrößenverteilung der Leuchtstoffpartikel durch den Hochtemperaturprozess nicht verändert wird und keine aufwändigen und die Leuchtstoffpartikel schädigenden nachgeschalteten Mahlprozesse benötigt werden. Eventuell bei Hochtemperaturprozess entstehende Agglomerate lassen sich bei Anwendung der erfindungsgemäßen Lösung sehr leicht, ohne hohen Energieeintrag deagglomerieren.

Aus EP-1560 274 ist eine Metalloxid-, Metallnitrid bzw. Metalloxynitrid-Beschichtung für Leuchtstoffe bekannt, wobei die Beschichtung mittels. CVD-Verfahren auf die Leuchtstoffe gebracht wird.

Aus EP-1121 397 B1 ist eine im wesentlichen transparente, Metalloxynitridbeschichtung für Leuchtstoffe bekannt, wobei die Beschichtung mittels CVD-Verfahren auf die Leuchtstoffe gebracht wird und so die Leuchtstoffpartikel gegen Feuchtigkeit schützen soll.

Die EP-0 455 401 B2 beschreibt gekapselte Elektrolumineszenz-Leuchtstoffpartikel, wobei jedes Partikel einen Leuchtstoff auf Zinksulfid-Basis aufweist, der vollständig mit einer weitgehend transparenten zusammenhängenden Metalloxid-Beschichtung gekapselt ist. Auch hier geschieht die Beschichtung über ein CVD-Verfahren und es entstehen ausschließlich zusammenhängende Beschichtungen.

CVD Verfahren sind verfahrenstechnisch und apparatetechnisch sehr aufwändig: Es sind sehr hohe Reinheiten der (inerten) Gasatmosphäre über den gesamten Prozess erforderlich und die strömungstechnische Auslegung muss derart erfolgen, dass eine homogene Zuführung der einzelnen Gasströme an das zu beschichtende Material erfolgen kann.

Aus WO 2007/064414 A sind halogenierte Silikat-Leuchtstoffe bekannt, die über ein Festkörperdiffusionsverfahren hergestellt und anschließend nasschemisch beschichtet werden.

Aus US 2006/068203 A1 sind "core-shell" Teilchen bekannt, umfassend einen Kern aus magnetischen Nanopartikeln (z. B. Fe₂O₃) und Quantendots aus Halbleitermaterialien (z. B. CdSe, ZnS, MgO) sowie einer Schale, z. B. aus Silica.

Aus EP-A-0160856 ist die Herstellung von Aluminiumoxid-beschichteten Erdalkali-Halophosphat-Leuchtstoffen über Gasphasen-CVD-Verfahen bekannt.

Gegenstand der vorliegenden Erfindung sind beschichtete Leuchtstoffpartikel enthaltend lumineszierende Teilchen, die aus mindestens einer lumineszierenden Verbindung, ausgewählt aus der Gruppe der (Y, Gd, Lu, Sc, Sm, Tb)₃ (Al, Ga)₅O₁₂:Ce (mit oder ohne Pr), YSiO₂N:Ce, Y₂Si₃O₃N₄:Ce, Gd₂Si₃O₃N₄:Ce, (Y,Gd,Tb,Lu)₃Al₅₋ₓSiₓO₁₂₋xNₓ:Ce, BaMgAl₁₀O₁₇:Eu (mit oder ohne Mn), SrAl₂O₄:Eu, Sr₄Al₁₄O₂₅:Eu, (Ca,Sr,Ba)Si₂N₂O₂: Eu, SrSiAl₂O₃N₂:Eu, (Ca,Sr,Ba)₂Si₅N₈:Eu, (Ca,Sr,Ba)SiN₂:Eu, CaAlSiN₃:Eu, Molybdate, Wolframate, Vanadate, jeweils einzeln oder Gemischen derselben mit einem oder mehreren Aktivatorionen wie Ce, Eu, Mn, Cr, Tb und/oder Bi, bestehen, und mindestens eine Aluminiumoxid, Zirkoniumoxid, Zinkoxid, Titandioxid und/oder Siliciumdioxid-Beschichtung mit poröser Oberfläche aus Meso- und/oder Makroporen, wobei die Mesoporen eine Porenöffnung zwischen 2 und 50 nm und die Makroporen eine Porenöffnung > 50 nm besitzen.

Die Beschichtung ist vorzugsweise weitgehend transparent, d.h. sie muss sowohl für das Anregungs- wie auch für das Emissionsspektrum der jeweils eingesetzten Konversionsleuchtstoffe eine 90%ige bis 100 % ige Transparenz gewährleisten. Andererseits kann die Transparenz der erfindungsgemäßen Beschichtung für alle Wellenlängen, die nicht der Anregungs- und Emissionswellenlänge entsprechen auch weniger als 90% bis 100% betragen.

Die Herstellung von Leuchtstoffen, z.B. YAG:Ce erfordert mindestens zwei nacheinander ablaufende Kalzinierungsschritte:
1. Eine Glühung an Luft bei einer Temperatur T₁ > 150 °C
2. eine Glühung in reduzierender Atmosphäre bei einer Temperatur T₂ > 800 °C, vorzugsweise zwischen 800 und 1750 °C.

Bei der ersten Glühung erfolgt eine nur schwache Agglomerierung der Primärkörner. Daher kann nach diesem Schritt durch Eintrag nur sehr geringer Energien eine Mahlung und Klassifizierung in die gewünschte Partikelgrößenverteilung (Zielfraktion) erfolgen.

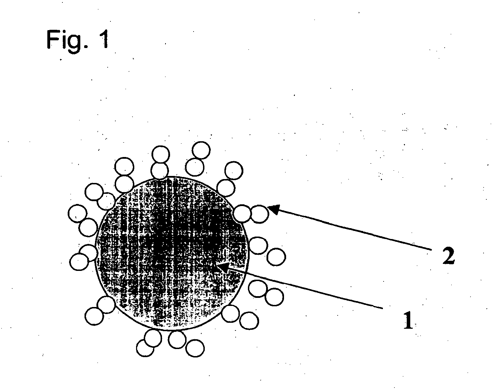

Diese Zielfraktion aus den vorkalzinierten Leuchtstoffpartikeln wird in einem nasschemischen Verfahren in einem Rührkessel mit einem weitgehend transparenten Metall-, Übergangsmetall- oder Halbmetalloxid (wie z.B. Aluminiumoxid) mittels Zugabe wässriger oder nichtwässriger Lösungen der entsprechenden, nichtflüchtigen Salzen und/oder metallorganischen Verbindungen beschichtet. Dies geschieht in der Art, dass auf den Leuchtstoffpartikeln vorzugsweise kleine Inseln aus Metall-, Übergangsmetall- oder Halbmetalloxidpartikeln abgeschieden werden. (siehe Fig. 1).

Dadurch wird die Oberfläche der beschichteten Leuchtstoffpartikel porös, wodurch eine Barrierewirkung für Sinterprozesse herbeigeführt wird. Gegenüber zusammenhängenden Beschichtungen wie sie im Stand der Technik erwähnt sind, hat die poröse Beschichtung den Vorteil, dass nur durch diese die Bildung von Abstandshaltern (Spacer) möglich ist. Letztere wirken während des Hochtemperaturprozesses einer Versinterung entgegen, indem ein direkter Kontakt der Leuchtstoffoberflächen zwischen mehreren Leuchtstoffpartikeln verhindert wird. Ein Versintern der Leuchtstoffoberflächen wird dadurch ausgeschlossen. Es ist lediglich möglich, dass die Oberflächen der porösen Beschichtungen der Leuchtstoffpartikel miteinander versintern. Diese Aggregate sind jedoch nur lose miteinander verbunden, da die Kontaktfläche sehr klein ist. Dadurch lassen sich diese Aggregate sehr leicht ohne Einfluss auf die Leuchtstoffeigenschaften trennen.

Ein weiterer Vorteil des Metall-, Übergangsmetall- oder Halbmetalloxids besteht darin, dass diese bei geeigneter Wahl mit dem Leuchtstoff keine Mischkristalle bilden, wodurch eine Stabilität der Diffusionsbarriere über den Prozess gegeben ist. Als weitgehend transparente Oxide für die Beschichtung werden Aluminiumoxid, Zinkoxid, Titandioxid, Zirkoniumoxid oder Siliziumoxid oder Kombinationen davon eingesetzt. Besonders bevorzugt wird Aluminiumoxid eingesetzt.

Eventuell kann es z.B. bei Einsatz von Aluminiumoxid als Beschichtungsmaterial während einer reduktiven Hochtemperaturbehandlung zu einer Dunkelfärbung an der Oberfläche der Aluminiumoxidpartikel kommen durch Bildung von Al-sub-Oxiden. Nach dem Hochtemperaturprozess ist dann eine selektive Oxidation des Al-sub-oxides in Al₂O₃ möglich durch eine Behandlung des Pulvers bei 600 bis 800°C in einer Wasserdampfatmosphäre.

Unter dem Begriff "Porosität bzw. porös" versteht man die mittlere Porenöffnung an der Oberfläche eines Materials. Die erfindungsgemäße beschichtete Leuchtstoffoberfläche ist meso- oder makroporös, wobei "mesoporös" eine Porenöffnung zwischen 2 bis 50 nm und "makroporös" eine Porengröße > 50 nm beschreibt.

Diese porösen Beschichtungen bieten außerdem die Möglichkeit, den Brechungsindex einer Einfachschicht weiter zu reduzieren.

Die Partikelgröße der erfindungsgemäßen Leuchtstoffe beträgt zwischen 50 nm und 30 µm, vorzugsweise zwischen 1 µm und 20 µm.

Die Dicke der erfindungsgemäßen Beschichtung beträgt zwischen 10 und 150 nm. Die Teilchengröße der Primärpartikel der Beschichtung beträgt zwischen 5 und 100 nm.

Erfindungsgemäß kommen als Material für die erfindungsgemäßen Leuchtstoffpartikel folgende Verbindungen in Frage:
(Y, Gd, Lu, Sc, Sm, Tb, Th, lr, Sb, Bi)₃ (Al, Ga)₅O₁₂:Ce (mit oder ohne Pr), YSi0₂N:Ce, Y₂Si₃O₃N₄:Ce, Gd₂Si₃O₃N₄:Ce, (Y,Gd,Tb,Lu)₃Al₅₋ₓSiₓO₁₂₋ₓNₓ:Ce, BaMgAl₁₀O₁₇:Eu (mit oder ohne Mn), SrAl₂O₄:Eu, Sr₄Al₁₄O₂₅:Eu, (Ca,Sr,Ba)Si₂N₂O₂:Eu, SrSiAl₂O₃N₂:Eu, (Ca,Sr,Ba)₂Si₅N₈:Eu, (Ca,Sr,Ba)SiN₂:Eu, CaAlSiN₃:Eu, Molybdate, Wolframate, Vanadate, jeweils einzeln oder Gemischen derselben mit einem oder mehreren Aktivatorionen wie Ce, Eu, Mn, Cr, Tb und/oder Bi.

Ein weiterer Gegenstand der vorliegenden Erfindung ist ein Verfahren zur Herstellung der erfindungsgemäßen beschichteten Leuchtstoffpartikel, gekennzeichnet durch die Schritte:
a. Herstellen einer vorkalzinierten Leuchtstoffprecursor-Suspension durch Mischen von mindestens zwei Edukten und mindestens einem Dotierstoff nach nasschemischen Methoden und thermisch behandelt bei einer Temperatur T₁ > 150 °C.
b. die vorkalzinierte Leuchtstoffprecursor-Suspension wird in einem nasschemischen Prozess bei erhöhter Temperatur mit einem weitgehend transparenten Metall-, Übergangs- oder Halbmetalloxid beschichtet und anschließend bei einer Temperatur T₂ > 800 °C kalziniert.
c. gegebenenfalls erfolgt zusätzlich eine selektive Oxidation von Suboxiden bei einer Temperatur T₃ < 800 °C zu den entsprechenden Metall- oder Halbmetalloxiden.

Die Edukte zur Herstellung des Leuchtstoffs bestehen, wie oben erwähnt, aus dem Basismaterial (z. B. Salzlösungen des Aluminiums, Yttriums und Cer) sowie mindestens einem Dotierstoff, vorzugsweise Europium oder Cer und gegebenenfalls weiteren Gd-, Lu-, Sc-, Sm-, Tb-, Pr- und/oder Gahaltigen Materialien. Als Edukte kommen anorganische und/oder organische Stoffe wie Nitrate, Carbonate, Hydrogencarbonate, Phosphate, Carboxylate, Alkoholate, Acetate, Oxalate, Halogenide, Sulfate, metallorganische Verbindungen, Hydroxide und/oder Oxide der Metalle, Halbmetalle, Übergangsmetalle und/oder Seltenerden in Frage, welche in anorganischen und/oder organischen Flüssigkeiten gelöst und/oder suspendiert sind. Vorzugsweise werden Mischnitratlösungen, Chlorid- oder Hydroxidlösungen eingesetzt, welche die entsprechenden Elemente im erforderlichen stöchiometrischen Verhältnis enthalten.

Die nasschemische Herstellung besitzt gegenüber der herkömmlichen Festkörperdiffusions-Methode (engl. mixing and firing) generell den Vorteil, dass die resultierenden Materialien eine höhere Einheitlichkeit in Bezug auf die stöchiometrische Zusammensetzung, die Partikelgröße und die Morphologie der Partikel aufweisen, aus denen der erfindungsgemäße Leuchtstoff hergestellt wird.

Für die nasschemische Vorbehandlung einer wässrigen Vorstufe der Leuchtstoffe (= Leuchtstoffprecursoren) bestehend z.B. aus einem Gemisch von Yttriumnitrat-, Aluminiumnitrat- und Cernitratlösung sind folgende bekannte Methoden bevorzugt:
- Cofällung mit einer NH₄HCO₃-Lösung (*siehe z.B.* Jander, Blasius Lehrbuch der analyt. u. präp. anorg. Chem. 2002*)*
- Pecchini-Verfahren mit einer Lösung aus Zitronensäure und Ethylenglykol (*siehe z.B.* Annual Review of Materials Research Vol. 36: 2006, 281-331*)*
- Combustion-Verfahren unter Verwendung von Harnstoff
- Sprühtrocknung wässriger oder organischer Salzlösungen (Edukte)
- Sprühpyrolyse (auch Spraypyrolyse genannt) wässriger oder organischer Salzlösungen (Edukte)

Bei der o.g. erfindungsgemäß besonders bevorzugten Cofällung werden z.B. Nitratlösungen der entsprechenden Leuchtstoffedukte mit einer NH4HCO₃-Lösung versetzt, wodurch sich der Leuchtstoffprecursor bildet.

Beim Pecchini-Verfahren werden z.B. die o.g. Nitratlösungen der entsprechenden Leuchtstoffedukte bei Raumtemperatur mit einem Fällungsreagenz bestehend aus Zitronensäure und Ethylenglykol versetzt und anschließend erhitzt. Durch Erhöhung der Viskosität kommt es zur Leuchtstoffprecursor-Bildung.

Beim bekannten Combustion-Verfahren werden z.B. die o.g. Nitratlösungen der entsprechenden Leuchtstoffedukte in Wasser gelöst, dann unter Rückfluss gekocht und mit Harnstoff versetzt, wodurch sich der Leuchtstoffprecursor langsam bildet.

Die Sprühpyrolyse gehört zu den Aerosolverfahren, die durch Versprühen von Lösungen, Suspensionen oder Dispersionen in einen durch unterschiedliche Art und Weise erhitzten Reaktionsraum (Reaktor) sowie die Bildung und Abscheidung von Feststoff- Partikeln gekennzeichnet sind. Im Gegensatz zur Sprühtrocknung mit Heißgastemperaturen < 200°C finden bei der Sprühpyrolyse als Hochtemperatur- Prozess außer der Verdampfung des Lösungsmittels zusätzlich die thermische Zersetzung der verwendeten Edukte (z. B. Salze) sowie die Neubildung von Stoffen (z. B. Oxide, Mischoxide) statt.

Die oben genannten 5 Verfahrensvarianten sind ausführlich in der WO 2007/004488 (Merck) beschrieben, die voll umfänglich in den Kontext der vorliegenden Anmeldung durch Bezugnahme eingefügt wird.

Die Herstellung der erfindungsgemäßen Leuchtstoffe kann nach verschiedenen nasschemischen Methoden erfolgen, indem
1) eine homogene Ausfällung der Bestandteile erfolgt, gefolgt von der Abtrennung des Lösemittels und einer ein- oder mehrstufigen thermischen Nachbehandlung, wobei ein Schritt davon in reduzierender Atmosphäre erfolgen kann,
2) die Mischung fein verteilt wird, beispielsweise mit Hilfe eines Sprühprozesses und eine Entfernung des Lösemittels erfolgt, gefolgt von einer ein -oder mehrstufigen thermischen Nachbehandlung, wobei ein Schritt davon in reduzierender Atmosphäre erfolgen kann, oder
3) die Mischung fein verteilt wird, beispielsweise mit Hilfe eines Sprühprozesses und eine Entfernung des Lösemittels einhergehend mit einer Pyrolyse erfolgt, gefolgt von einer ein- oder mehrstufigen thermischen Nachbehandlung, wobei ein Schritt davon in reduzierender Atmosphäre erfolgen kann.
4) die mit Hilfe der Methoden 1 - 3 hergestellten Leuchtstoffe nachträglich nasschemisch beschichtet werden.

Vorzugsweise geschieht die nasschemische Herstellung des Leuchtstoffes nach dem Präzipitations- und/oder Sol-Gel-Verfahren.

Bei der oben genannten thermischen Nachbehandlung ist es bevorzugt, wenn die Glühung zumindest teilweise unter reduzierenden Bedingungen (z.B. mit Kohlenmonoxid, Formiergas, reinen oder Wasserstoff oder zumindest Vakuum oder Sauerstoffmangel-Atmosphäre) durchgeführt wird.

Generell ist es auch möglich, die erfindungsgemäßen Leuchtstoffe über die Festkörperdiffusions-Methode herzustellen, was jedoch die schon erwähnten Nachteile verursacht.

Mit Hilfe der o.g. Verfahren können beliebige äußere Formen der Leuchtstoffpartikel hergestellt werden, wie sphärische Partikel, Plättchen und strukturierte Materialien und Keramiken.

Die Anregbarkeit der erfindungsgemäßen Leuchtstoffe erstrecken sich zudem über einen weiten Bereich, der von etwa 250 nm bis 560 nm, bevorzugt 430 nm bis zu etwa 500 nm reicht. Damit sind diese Leuchtstoffe zur Anregung durch UV oder blau emittierende Primärlichtquellen wie LEDs oder konventionelle Entladungslampen (z.B. auf Hg-Basis) geeignet.

Ein weiterer Gegenstand der vorliegenden Erfindung ist eine Beleuchtungseinheit mit mindestens einer Primärlichtquelle, dessen Emissionsmaximum bzw. -maxima im Bereich 380 nm bis 530 nm, bevorzugt 430 nm bis zu etwa 500 nm reicht. Insbesondere bevorzugt ist ein Bereich zwischen 440 und 480 nm, wobei die primäre Strahlung teilweise oder vollständig durch die erfindungsgemäßen beschichteten Leuchtstoffe in längerwellige Strahlung konvertiert wird. Vorzugsweise ist diese Beleuchtungseinheit weiß emittierend oder emittiert Licht mit einem bestimmten Farbpunkt (Color-on-demand-Prinzip).

In einer bevorzugten Ausführungsform der erfindungsgemäßen Beleuchtungseinheit handelt es sich bei der Lichtquelle um ein lumineszentes IndiumAluminiumGalliumNitrid, insbesondere der Formel InᵢGaⱼAlₖN, wobei 0 ≤ i, 0 ≤ j, 0 ≤ k, und i+j+k=1 ist.

Dem Fachmann sind mögliche Formen von derartigen Lichtquellen bekannt. Es kann sich hierbei um lichtemittierende LED-Chips unterschiedlichen Aufbaus handeln.

In einer weiteren bevorzugten Ausführungsform der erfindungsgemäßen Beleuchtungseinheit handelt es sich bei der Lichtquelle um eine lumineszente auf ZnO, TCO (Transparent conducting oxide), ZnSe oder SiC basierende Anordnung oder auch um eine auf einer organischen lichtemittierende Schicht basierende Anordnung (OLED).

In einer weiteren bevorzugten Ausführungsform der erfindungsgemäßen Beleuchtungseinheit handelt es sich bei der Lichtquelle um eine Quelle, die Elektrolumineszenz und/oder Photolumineszenz zeigt. Weiterhin kann es sich bei der Lichtquelle auch um eine Plasma- oder Entladungsquelle handeln.

Die erfindungsgemäßen Leuchtstoffe können entweder in einem Harz dispergiert (z.B. Epoxy- oder Siliconharz), oder bei geeigneten Größenverhältnissen direkt auf der Primärlichtquelle angeordnet werden oder aber von dieser, je nach Anwendung, entfernt angeordnet sein (letztere Anordnung schliesst auch die "Remote phosphor Technologie" mit ein). Die Vorteile der "Remote phosphor Technologie" sind dem Fachmann bekannt und z.B. der folgenden Publikation zu entnehmen: Japanese Journ. of Appl. Phys. Vol 44, No. 21 (2005). L649-L651.

In einer weiteren Ausführungsform ist es bevorzugt, wenn die optische Ankopplung der Beleuchtungseinheit zwischen dem beschichteten Leuchtstoff und der Primärlichtquelle durch eine lichtleitende Anordnung realisiert wird.

Dadurch ist es möglich, dass an einem zentralen Ort die Primärlichtquelle installiert wird und diese mittels lichtleitender Vorrichtungen, wie beispielsweise lichtleidenden Fasern, an den Leuchtstoff optisch angekoppelt ist. Auf diese Weise lassen sich den Beleuchtungswünschen angepasste Leuchten lediglich bestehend aus einem oder unterschiedlichen Leuchtstoffen, die zu einem Leuchtschirm angeordnet sein können, und einem Lichtleiter, der an die Primärlichtquelle angekoppelt ist, realisieren. Auf diese Weise ist es möglich, eine starke Primärlichtquelle an einen für die elektrische Installation günstigen Ort zu platzieren und ohne weitere elektrische Verkabelung, sondern nur durch Verlegen von Lichtleitern an beliebigen Orten Leuchten aus Leuchtstoffen, welche an die Lichtleiter gekoppelt sind, zu installieren.

Ein weiterer Gegenstand der vorliegenden Erfindung ist die Verwendung der erfindungsgemäßen Leuchtstoffe zur teilweisen oder vollständigen Konversion der blauen oder im nahen UV-liegenden Emission einer Lumineszenzdiode.

Weiterhin bevorzugt ist die Verwendung der erfindungsgemäßen Leuchtstoffe zur Konversion der blauen oder im nahen UV-liegenden Emission in sichtbare weiße Strahlung. Weiterhin ist die Verwendung der erfindungsgemäßen Leuchtstoffe zur Konversion der Primärstrahlung in einen bestimmten Farbpunkt nach dem "Color on demand"-Konzept bevorzugt.

Ein weiterer Gegenstand der vorliegenden Erfindung ist die Verwendung der erfindungsgemäßen Leuchtstoffe in Elektrolumineszenz-Materialien, wie beispielsweise Elektrolumineszenz-Folien (auch Leuchtfolien oder Lichtfolien genannt), in denen beispielsweise Zinksulfid oder Zinksulfid dotiert mit Mn²⁺, Cu⁺, oder Ag⁺ als Emitter eingesetzt wird, die im gelbgrünen Bereich emittieren. Die Anwendungsbereiche der Elektrolumineszenz-Folie sind z.B. Werbung, Displayhintergrund-beleuchtung in Flüssigkristallbildschirmen (LC-Displays) und Dünnschichttransistor-Displays (TFT-Displays), selbstleuchtende KFZ-Kennzeichenschilder, Bodengrafik (in Verbindung mit einem tritt- und rutschfesten Laminat), in Anzeigen- und/oder Bedienelementen beispielsweise in Automobilen, Zügen, Schiffen und Flugzeugen oder auch Haushalts-, Garten-, Mess- oder Sport- und Freizeitgeräten.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und käuflich erhältlich oder können nach bekannten Methoden synthetisiert werden. Die in den Beispielen angegebenen Temperaturen gelten immer in °C. Es versteht sich weiterhin von selbst, dass sich sowohl in der Beschreibung als auch in den Beispielen die zugegebenen Mengen der Komponenten in den Zusammensetzungen immer zu insgesamt 100% addieren. Gegebene Prozentangaben sind immer im gegebenen Zusammenhang zu sehen. Sie beziehen sich üblicherweise aber immer auf die Masse der angegebenen Teil- oder Gesamtmenge.

### Beispiel 1: Herstellung eines mit Alumina-beschichteten YAG:Ce

410,423 g Aluminiumchlorid Hexahydrat (1,70 Mol), 300,140 g Yttriumchlorid Hexahydrat (0,98 Mol) und 10,850 g Cerchlorid Hexahydrat (0,03 Mol) werden in 800 ml vollentsalztem Wasser gelöst. Diese Lösung wird innerhalb von 1 ½ Stunden in eine frisch angesetzte Lösung aus 1075,2 g Ammoniumhydrogencarbonat in 21 vollentsalztem Wasser unter Rühren eingetropft. Anschließend wird die Mischung über einen Zeitraum von 30 min nachgerührt. Der Niederschlag wird abfiltriert und bei 120°C getrocknet. Danach erfolgt die Vorkalzinierung des Materials bei 1000°C über einen Zeitraum.von 4 h in Luftatmosphäre.

In einem Glasreaktor mit Heizmantel werden 50 g vorkalziniertes YAG:Ce in 950 g VE-Wasser suspendiert. Zu der Suspension werden unter Rühren bei 80 °C 600g einer wässrigen Lösung von 98,7 g AlCl3*6H2O pro Kg Lösung enthält, in 2 ½ Stunden zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird auf Raumtemperatur abgekühlt, der Leuchtstoff abfiltriert, mit Wasser gewaschen und getrocknet. Der getrocknete Leuchtstoff wird abschließend 30 min bei 750 °C geglüht und abschließend über ein 50µ-Sieb gesiebt. Danach wird das Produkt in die weitere Prozessierung, d.h. Hochtemperaturkalzinierung bei 1700°C in 20% H₂-Atmosphäre, überführt. Falls das danach erhaltene Material eine Vergrauung aufweist (Bildung von Aluminium-sub-oxid, s. oben), wird es in einer ungesättigten Wasserdampfatmösphäre im Ofen bei einer Temperatur zwischen 600°C und 800°C über einen Zeitraum von 2 h behandelt.

### Beispiel 2: Herstellung eines mit Zirkondioxid-beschichteten YAG:Ce

410,423 g Aluminiumchlorid Hexahydrat (1,70 Mol), 300,140 g Yttriumchlorid Hexahydrat (0,98 Mol) und 10,850 g Cerchlorid Hexahydrat (0,03 Mol) werden in 800 ml vollentsalztem Wasser gelöst. Diese Lösung wird innerhalb von 1 ½ Stunden in eine frisch angesetzte Lösung aus 1075,2 g Ammoniumhydrogencarbonat in 2 I vollentsalztem Wasser unter Rühren eingetropft. Anschließend wird die Mischung über einen Zeitraum von 30 min nachgerührt. Der Niederschlag wird abfiltriert und bei 120°C getrocknet. Danach erfolgt die Vorkalzinierung des Materials bei 1000°C über einen Zeitraum von 4 h in Luftatmosphäre.

100g des vorkalzinierten YAG:Ce-Leuchtstoffes wird in 2 I VE-Wasser suspendiert und die Suspension mit 1000 UpM gerührt. Die Suspension wird anschließend mittels Thermostaten auf eine Temperatur von 75°C gebracht. Eine 10 wt % Zirkonoxichloridlösung (ZrOCl₂ -Lösung) wird nun mit einer Dosierrate von 2 ml/min zur vorgelegten Suspension dazudosiert. Der pH-Wert der Suspension wird dabei durch Gegentitration mit einer 30 %igen Natronlauge konstant auf pH=3,5 gehalten. Nach erfolgter Zugabe wird der beschichtete Leuchtstoff abfiltriert und mit VE-Wasser salzfrei gewaschen. Der getrocknete Leuchtstoff wird abschließend 30 min bei 750 °C geglüht und über ein 20µm-Sieb gesiebt.
Danach wird das Produkt in die weitere Prozessierung, den zweiten Hochtemperaturkalzinierungschritt überführt.

### Beispiel 3: Herstellung eines mit Titandioxid-beschichteten YAG:Ce

410,423 g Aluminiumchlorid Hexahydrat (1,70 Mol), 300,140 g Yttriumchlorid Hexahydrat (0,98 Mol) und 10,850 g Cerchlorid Hexahydrat (0,03 Mol) werden in 800 ml vollentsalztem Wasser gelöst. Diese Lösung wird innerhalb von 1 ½ Stunden in eine frisch angesetzte Lösung aus 1075,2 g Ammoniumhydrogencarbonat in 2 l vollentsalztem Wasser unter Rühren eingetropft. Anschließend wird die Mischung über einen Zeitraum von 30 min nachgerührt. Der Niederschlag wird abfiltriert und bei 120°C getrocknet. Danach erfolgt die Vorkalzinierung des Materials bei 1000°C ; über einen Zeitraum von 4 h in Luftatmosphäre.

100g des vorliegenden YAG:Ce wird in 2 I VE-Wasser suspendiert und die Suspension mit 1000 UpM gerührt. Die Suspension wird anschließend mittels Thermostaten auf eine Temperatur von 75°C gebracht. Eine 30 wt % Titanoxichloridlösung (TiOCl₂ -Lösung) wird nun mit einer Dosierrate von 2 ml/min zur vorgelegten Suspension dazudosiert. Der pH-Wert der Suspension wird dabei durch Gegentitration mit einer 30 %igen Natronlauge konstant auf pH=2,2 gehalten. Nach erfolgter Zugabe wird die Suspension auf pH=5,0 eingestellt und der beschichtete Leuchtstoff abfiltriert sowie mit VE-Wasser salzfrei gewaschen. Der getrocknete Leuchtstoff wird abschließend 30 min bei 800 °C geglüht und über ein 20 µm-Sieb gesiebt.

Danach wird das Produkt in die weitere Prozessierung, d.h. Hochtemperaturkalzinierung in oxidativer oder Schutzgasatmosphäre überführt. Nach der Hochtemperaturkalzinierung wird bei grauer Verfärbung (Titansuboxidbildung) das Material im Wasserdampf bei erhöhter Temperatur (600°C - 800°C) über zwei Stunden behandelt, wodurch die Grauverfärbung verschwindet und sich Titandioxid bildet.

### Beispiel 4: Herstellung eines mit Zinkoxid-beschichteten YAG:Ce

410,423 g Aluminiumchlorid Hexahydrat (1,70 Mol), 300,140 g Yttriumchlorid Hexahydrat (0,98 Mol) und 10,850 g Cerchlorid Hexahydrat (0,03 Mol) werden in 800 ml vollentsalztem Wasser gelöst. Diese Lösung wird innerhalb von 1 ½Stunden in eine frisch angesetzte Lösung aus 1075,2 g Ammoniumhydrogencarbonat in 2 I vollentsalztem Wasser unter Rühren eingetropft. Anschließend wird die Mischung über einen Zeitraum von 30 min nachgerührt. Der Niederschlag wird abfiltriert und bei 120°C getrocknet. Danach erfolgt die Vorkalzinierung des Materials bei 1000°C über einen Zeitraum von 4 h in Luftatmosphäre.

100g des vorliegenden YAG:Ce-Leuchtstoffes wird in 2 I VE-Wasser suspendiert und die Suspension mit 1000 UpM gerührt. Die Suspension wird anschließend mittels Thermostaten auf eine Temperatur von 75°C gebracht. Eine Zinkchloridlösung (ZnCl₂-Lösung) - 22,7 g Zinkchlorid zusammen mit 1,0 g Aluminiumchlorid-Hexahydrat in 400 g VE-Wasser gelöst - wird nun mit einer Dosierrate von 5 ml/min zur vorgelegten Suspension dazudosiert. Der pH-Wert der Suspension wird dabei durch Gegentitration mit einer 15 %igen Natronlauge konstant auf pH= 8,0 gehalten. Nach erfolgter Zugabe wird die Suspension durch Zugabe von 10 % HCl-Lösung auf pH=5 eingestellt. Der beschichtete Leuchtstoff wird nun abfiltriert und mit VE-Wasser salzfrei gewaschen und anschließend getrocknet. Nun wird das Material bei 500 °C geglüht und über ein 20µm-Sieb gesiebt.

Danach wird das Produkt in die weitere Prozessierung, d.h. Hochtemperaturkalzinierung bei 1700°C in 20% H₂-Atmosphäre, überführt.

### Beispiel 5: Herstellung eines mit Aluminiumoxid-beschichteten (Ca,Sr,Ba)SiN₂:Eu

In einem Glasreaktor mit Heizmantel werden 50 g (Ca,Sr,Ba)SiN₂:Eu in 950 g VE-Wasser suspendiert. Zu der Suspension werden unter Rühren bei 80 °C 600g einer wässrigen Lösung von 98,7 g AlCl₃ *6H₂O pro Kg Lösung enthält, in 2 ½ Stunden zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird auf Raumtemperatur abgekühlt, der Leuchtstoff abfiltriert, mit Wasser gewaschen und getrocknet. Der getrocknete Leuchtstoff wird abschließend 30 min bei 750 °C geglüht und abschließend über ein 50µ-Sieb gesiebt.

### Beispiel 6: Herstellung eines mit Aluminiumoxid-beschichteten (Ca,Sr,Ba)Si₂N₅ :Eu

In einem Glasreaktor mit Heizmantel werden 50 g (Ca,Sr,Ba)Si₂N₅:Eu in 950 g VE-Wasser suspendiert. Zu der Suspension werden unter Rühren bei 80 °C 600g einer wässrigen Lösung von 98,7 g AlCl₃ *6H₂O pro Kg Lösung enthält, in 2½ Stunden zudosiert. Dabei wird der pH-Wert durch Zudosierung von Natronlauge konstant auf 6,5 gehalten. Nach dem Ende der Zudosierung wird noch 1 Stunde bei 80°C nachgerührt, dann wird auf Raumtemperatur abgekühlt, der Leuchtstoff abfiltriert, mit Wasser gewaschen und getrocknet. Der getrocknete Leuchtstoff wird abschließend 30 min bei 750 °C geglüht und abschließend über ein 50µ-Sieb gesiebt.

### Beispiel 7: Herstellung eines mit Zirkoniumoxid-beschichteten (Ca,Sr,Ba)SiN₂:Eu

100g (Ca,Sr,Ba)SiN₂:Eu werden in 2 I VE-Wasser suspendiert und die Suspension mit 1000 UpM gerührt. Die Suspension wird anschließend mittels Thermostaten auf eine Temperatur von 75°C gebracht. Eine 10 wt % Zirkonoxichloridlösung (ZrOCl₂ -Lösung) wird nun mit einer Dosierrate von 2 ml/min zur vorgelegten Suspension dazudosiert. Der pH-Wert der Suspension wird dabei durch Gegentitration mit einer 30 %igen Natronlauge konstant auf pH=3,5 gehalten. Nach erfolgter Zugabe wird der beschichtete Leuchtstoff abfiltriert und mit VE-Wasser salzfrei gewaschen. Der getrocknete Leuchtstoff wird abschließend 30 min bei 750 °C geglüht und über ein 20µm-Sieb gesiebt.

### Beispiel 8: Herstellung eines mit Zirkoniumoxid-beschichteten (Ca,Sr,Ba)Si₂N₅:Eu

100g (Ca,Sr,Ba)Si2N5:Eu werden in 2 I VE-Wasser suspendiert und die Suspension mit 1000 UpM gerührt. Die Suspension wird anschließend mittels Thermostaten auf eine Temperatur von 75°C gebracht. Eine 10 wt % Zirkonoxichloridlösung (ZrOCl₂ -Lösung) wird nun mit einer Dosierrate von 2 ml/min zur vorgelegten Suspension dazudosiert. Der pH-Wert der Suspension wird dabei durch Gegentitration mit einer 30 %igen Natronlauge konstant auf pH=3,5 gehalten. Nach erfolgter Zugabe wird der beschichtete Leuchtstoff abfiltriert und mit VE-Wasser salzfrei gewaschen. Der getrocknete Leuchtstoff wird abschließend 30 min bei 750 °C geglüht und über ein 20µm-Sieb gesiebt.

### Beispiel 9: Herstellung eines mit Titandioxid-beschichteten (Ca,Sr,Ba)SiN₂:Eu

100g (Ca,Sr,Ba)SiN₂:Eu werden in 2 I VE-Wasser suspendiert und die Suspension mit 1000 UpM gerührt. Die Suspension wird anschließend mittels Thermostaten auf eine Temperatur von 75°C gebracht. Eine 30 wt % Titanoxichloridlösung (TiOCl₂ -Lösung) wird nun mit einer Dosierrate von 2 ml/min zur vorgelegten Suspension dazudosiert. Der pH-Wert der Suspension wird dabei durch Gegentitration mit einer 30 %igen Natronlauge konstant auf pH=2,2 gehalten. Nach erfolgter Zugabe wird die Suspension auf pH=5,0 eingestellt und der beschichtete Leuchtstoff abfiltriert sowie mit VE-Wasser salzfrei gewaschen. Der getrocknete Leuchtstoff wird abschließend 30 min bei 800 °C geglüht und über ein 20 µm-Sieb gesiebt.

### Beispiel 10: Herstellung eines mit Titanoxid-beschichteten (Ca,Sr,Ba)Si₂N₅:Eu

100g (Ca,Sr,Ba)Si₂N₅:Eu werden in 2 I VE-Wasser suspendiert und die Suspension mit 1000 UpM gerührt. Die Suspension wird anschließend mittels Thermostaten auf eine Temperatur von 75°C gebracht. Eine 30 wt % Titanoxichloridlösung (TiOCl₂ -Lösung) wird nun mit einer Dosierrate von 2 ml/min zur vorgelegten Suspension dazudosiert. Der pH-Wert der Suspension wird dabei durch Gegentitration mit einer 30 %igen Natronlauge konstant auf pH=2,2 gehalten. Nach erfolgter Zugabe wird die Suspension auf pH=5,0 eingestellt und der beschichtete Leuchtstoff abfiltriert sowie mit VE-Wasser salzfrei gewaschen. Der getrocknete Leuchtstoff wird abschließend 30 min bei 800 °C geglüht und über ein 20 µm-Sieb gesiebt.

### Beispiel 11: Herstellung eines mit Zinkoxid-beschichteten (Ca,Sr,Ba)SiN₂:Eu

100g (Ca,Sr,Ba)SiN₂:Eu werden in 2 I VE-Wasser suspendiert und die Suspension mit 1000 UpM gerührt. Die Suspension wird anschließend mittels Thermostaten auf eine Temperatur von 75°C gebracht. Eine Zinkchloridlösung (ZnCl₂-Lösung) - 22,7 g Zinkchlorid zusammen mit 1,0 g Aluminiumchlorid-Hexahydrat in 400 g VE-Wasser gelöst - wird nun mit einer Dosierrate von 5 ml/min zur vorgelegten Suspension dazudosiert. Der pH-Wert der Suspension wird dabei durch Gegentitration mit einer 15 %igen Natronlauge konstant auf pH= 8,0 gehalten. Nach erfolgter Zugabe wird die Suspension durch Zugabe von 10 % HCl-Lösung auf pH=5 eingestellt. Der beschichtete Leuchtstoff wird nun abfiltriert und mit VE-Wasser salzfrei gewaschen und anschließend getrocknet. Nun wird das Material bei 500 °C geglüht und über ein 20µm-Sieb gesiebt.

### Beispiel 12: Herstellung eines mit Zinkoxid-beschichteten (Ca,Sr,Ba)Si₂N₅:Eu

100g (Ca,Sr,Ba)Si₂N₅:Eu werden in 2 I VE-Wasser suspendiert und die Suspension mit 1000 UpM gerührt. Die Suspension wird anschließend mittels Thermostaten auf eine Temperatur von 75°C gebracht. Eine Zinkchloridlösung (ZnCl₂-Lösung) - 22,7 g Zinkchlorid zusammen mit 1,0 g Aluminiumchlorid-Hexahydrat in 400 g VE-Wasser gelöst - wird nun mit einer Dosierrate von 5 ml/min zur vorgelegten Suspension dazudosiert. Der pH-Wert der Suspension wird dabei durch Gegentitration mit einer 15 %igen Natronlauge konstant·auf pH= 8,0 gehalten. Nach erfolgter Zugabe wird die Suspension durch Zugabe von 10 % HCl-Lösung auf pH=5 eingestellt. Der beschichtete Leuchtstoff wird nun abfiltriert und mit VE-Wasser salzfrei gewaschen und anschließend getrocknet. Nun wird das Material bei 500 °C geglüht und über ein 20µm-Sieb gesiebt.

### Beispiel 13: Herstellung eines mit SiO₂-beschichteten (Ca,Sr,Ba)SiN₂ :Eu

50 g (Ca,Sr,Ba)SiN₂ :Eu werden in einem 2-L-Reaktor mit Schliffdeckel, Heizmantel und Rückflußkühler in 1 Liter Ethanol suspendiert. Dazu wird eine Lösung von 17 g Ammoniakwasser (25 Gew% NH₃) in 170 g Wasser gegeben. Unter Rühren wird bei 65 °C eine Lösung von 48 g Tetraethylorthosilikat (TEOS) in 48 g wasserfreiem Ethanol langsam (ca. 1 ml/min) zugetropft. Nach Beendigung der Zugabe wird die Suspension nach 2 Stunden nachgerührt, auf Raumtemperatur gebracht und abfiltriert. Der Rückstand wird mit Ethanol gewaschen, getrocknet, anschließend geglüht und gesiebt.

### Beispiel 14: Herstellung eines mit SiO₂-beschichteten (Ca,Sr,Ba)Si₂ N₅:Eu

50 g (Ca,Sr,Ba)Si₂ N₅:Eu werden in einem 2-L-Reaktor mit Schliffdeckel, Heizmantel und Rückflußkühler in 1 Liter Ethanol suspendiert. Dazu wird eine Lösung von 17 g Ammoniakwasser (25 Gew% NH₃) in 170 g Wasser gegeben. Unter Rühren wird bei 65 °C eine Lösung von 48 g Tetraethylorthosilikat (TEOS) in 48 g wasserfreiem Ethanol langsam (ca. 1 ml/min) zugetropft. Nach Beendigung der Zugabe wird die Suspension nach 2 Stunden nachgerührt, auf Raumtemperatur gebracht und abfiltriert.

Der Rückstand wird mit Ethanol gewaschen, getrocknet, anschließend geglüht und gesiebt.

### Beschreibung der Figuren

Im folgenden soll die Efindung anhand eines Ausführungsbeispiels näher erläutert werden. Es zeigen:
Fig. 1: Spacer-Wirkung der Al₂O₃ -Oberflächenbeschichtung 1 zeigt ein vorkalziniertes YAG-Leuchtstoffpartikel 2 zeigt die Al₂O₃-Beschichtung

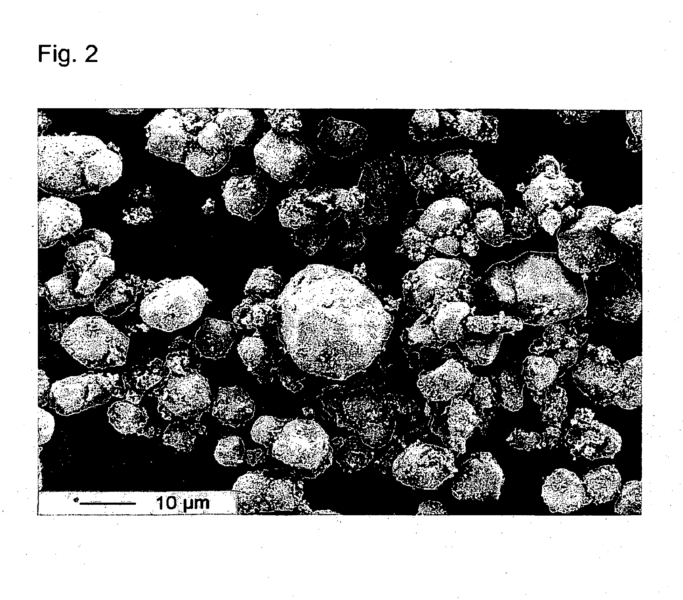

Fig.2 : REM-Aufnahme von Partikeln, die mit Al₂O₃ Spacem beschichtet sind

## Patentansprüche

1. Beschichtete Leuchtstoffpartikel enthaltend lumineszierende Teilchen, die aus mindestens einer lumineszierenden Verbindung, ausgewählt aus der Gruppe der (Y, Gd, Lu, Sc, Sm, Tb)₃ (Al, Ga)₅O₁₂:Ce (mit oder ohne Pr), YSiO₂N:Ce, Y₂Si₃O₃N₄:Ce, Gd₂Si₃O₃N₄:Ce, (Y,Gd,Tb,Lu)₃Al₅₋ₓSiₓO₁₂₋ₓNₓ:Ce, BaMgAl₁₀O₁₇:Eu (mit oder ohne Mn), SrAl₂O₄:Eu, Sr₄Al₁₄O₂₅:Eu, (Ca,Sr,Ba)Si₂N₂O₂:Eu, SrSiAl₂O₃N₂:Eu, (Ca,Sr,Ba)₂Si₅N₈:Eu, (Ca,Sr,Ba)SiN₂:Eu, CaAlSiN₃:Eu, Molybdate, Wolframate, Vanadate, jeweils einzeln oder Gemischen derselben mit einem oder mehreren Aktivatorionen wie Ce, Eu, Mn, Cr, Tb und/oder Bi, bestehen, und mindestens eine Aluminiumoxid, Zirkoniumoxid, Zinkoxid, Titandioxid und/oder Siliciumdioxid-Beschichtung mit poröser Oberfläche aus Meso- und/oder Makroporen, wobei die Mesoporen eine Porenöffnung zwischen 2 und 50 nm und die Makroporen eine Porenöffnung > 50 nm besitzen.

2. Verfahren zur Herstellung von beschichteten Leuchtstoffpartikeln nach Anspruch 1, **gekennzeichnet durch** die Schritte:
a. Herstellen einer vorkalzinierten Leuchtstoffprecursor-Suspension durch Mischen von mindestens zwei Edukten und mindestens einem Dotierstoff mittels Sol-Gel- oder Präzipitationsverfahren, wobei die thermische Behandlung bei einer Temperatur Ti > 150 °C erfolgt;
b. die vorkalzinierte Leuchtstoffprecursor-Suspension wird in einem nasschemischen Prozess bei erhöhter Temperatur mit einem weitgehend transparenten Metall-, Übergangs- oder Halbmetalloxid beschichtet und anschließend bei einer Temperatur T₂ > 800 °C kalziniert;
c. gegebenenfalls erfolgt zusätzlich eine selektive Oxidation von Suboxiden bei einer Temperatur T₃ < 800 °C zu den entsprechenden Metall- oder Halbmetalloxiden.

3. Verfahren nach Anspruch 2, **dadurch gekennzeichnet, dass** als weitgehend transparentes Metall-, Übergangsmetall- oder Halbmetalloxid Nanopartikel aus Aluminiumoxid eingesetzt werden.

4. Verfahren nach Anspruch 2 und/oder 3, **dadurch gekennzeichnet, dass** die nasschemische Herstellung der Leuchtstoffprecursoren aus einer der folgenden 5 Methoden gewählt wird:
• Cofällung mit einer NH₄HCO₃-Lösung
• Pecchini-Prozess mit einer Lösung aus Zitronensäure und Ethylenglycol
• Combustion-Prozess unter Verwendung von Harnstoff
• Sprühtrocknung der dispergierten Edukte
• Sprühpyrolyse der dispergierten Edukte.

5. Verfahren nach Anspruch 4, **dadurch gekennzeichnet, dass** die nasschemische Herstellung der Leuchtstoffprecursoren mittels Cofällung mit einer NH₄HCO₃-Lösung erfolgt.

6. Verfahren nach einem oder mehreren der Ansprüche 2 bis 5, **dadurch gekennzeichnet, dass** die Beschichtung mit mindestens einem Metall-, Übergangsmetall- oder Halbmetalloxid mittels Zugabe wässriger oder nichtwässriger Lösungen von nichtflüchtigen Salzen und/oder metallorganischen Verbindungen durchgeführt wird.

7. Verfahren nach einem oder mehreren der Ansprüche 2 bis 6, **dadurch gekennzeichnet, dass** die Edukte und der Dotierstoff anorganische und/oder organische Stoffe wie Nitrate, Carbonate, Hydrogencarbonate, Phosphate, Carboxylate, Alkoholate, Acetate, Oxalate, Halogenide, Sulfate, metallorganische Verbindungen, Hydroxide und/oder Oxide der Metalle, Halbmetalle, Übergangsmetalle und /oder Seltenerden sind, welche in anorganischen und/oder organischen Flüssigkeiten gelöst und/oder suspendiert sind.

8. Beleuchtungseinheit mit mindestens einer Primärlichtquelle, deren Emissionsmaximum im Bereich 380 nm bis 530 nm liegt, vorzugsweise zwischen 430 nm und 500 nm, wobei diese Strahlung teilweise oder vollständig in längerwellige Strahlung konvertiert wird durch beschichtete Leuchtstoffpartikel nach Anspruch 1.

9. Beleuchtungseinheit nach Anspruch 8, **dadurch gekennzeichnet, dass** es sich bei der Lichtquelle um ein lumineszentes IndiumAluminiumGalliumNitrid, insbesondere der Formel InᵢGaⱼAlₖN, wobei 0 ≤ i, 0≤ j, 0 ≤ k, und i+j+k=1 handelt.

10. Beleuchtungseinheit nach Anspruch 8, **dadurch gekennzeichnet, dass** es bei der Lichtquelle um eine lumineszente auf ZnO, TCO (Transparent conducting oxide), ZnSe oder SiC basierende Verbindung handelt.

11. Beleuchtungseinheit nach Anspruch 8, **dadurch gekennzeichnet, dass** es sich bei der Lichtquelle um eine auf einer organischen lichtemittierenden Schicht basierendes Material handelt.

12. Beleuchtungseinheit nach Anspruch 8, **dadurch gekennzeichnet, dass** es sich bei der Lichtquelle um eine Quelle handelt, die Elektrolumineszenz und/oder Photolumineszenz zeigt.

13. Beleuchtungseinheit nach Anspruch 8, **dadurch gekennzeichnet, dass** es sich bei der Lichtquelle um eine Plasma- oder Entladungsquelle handelt.

14. Verwendung von beschichteten Leuchtstoffpartikeln nach Anspruch 1 zur teilweisen oder vollständigen Konversion der blauen oder im nahen UV-liegenden Emission einer Lumineszenzdiode.

## Claims

1. Coated phosphor particles comprising luminescent particles which consist of at least one luminescent compound selected from the group of (Y,Gd,Lu,Sc,Sm,Tb)₃(Al,Ga)₅O_{12:}Ce (with or without Pr), YSiO₂N:Ce, Y₂Si₃O₃N₄:Ce, Gd₂Si₃O₃N₄:Ce, (Y,Gd,Tb,Lu)₃Al₅₋ₓSiₓOi₂₋ₓNₓ:Ce, BaMgAl₁₀O₁₇:Eu (with or without Mn), SrAl₂O₄:Eu, Sr₄Al₁₄O₂₅:Eu, (Ca,Sr,Ba)Si₂N₂O₂:Eu, SrSiAl₂O₃N₂:Eu, (Ca,Sr,Ba)₂Si₅N₈:Eu, (Ca,Sr,Ba)SiN₂:Eu, CaAlSiN₃:Eu, molybdates, tungstates, vanadates, in each case individually or mixtures thereof with one or more activator ions, such as Ce, Eu, Mn, Cr, Tb and/or Bi, and at least one aluminium oxide, zirconium oxide, zinc oxide, titanium dioxide and/or silicon dioxide coating having a porous surface comprising meso- and/or macropores, where the mesopores have a pore opening between 2 and 50 nm and the macropores have a pore opening > 50 nm.

2. Process for the production of coated phosphor particles according to Claim 1, **characterised by** the steps:
a. preparation of a pre-calcined phosphor precursor suspension by mixing at least two starting materials and at least one dopant by means of sol-gel or precipitation methods, where the thermal treatment is carried out at a temperature T₁ > 150°C;
b. the pre-calcined phosphor precursor suspension is coated with a substantially transparent metal oxide, transition-metal oxide or semimetal oxide in a wet-chemical process at elevated temperature and subsequently calcined at a temperature T₂ > 800°C;
c. a selective oxidation of suboxides at a temperature T₃ < 800°C to give the corresponding metal oxides or semimetal oxides is optionally additionally carried out.

3. Process according to Claim 2, **characterised in that** the substantially transparent metal oxide, transition-metal oxide or semimetal oxide employed is nanoparticles of aluminium oxide.

4. Process according to Claim 2 and/or 3, **characterised in that** the wet-chemical preparation of the phosphor precursors is selected from one of the following 5 methods:
• coprecipitation with an NH₄HCO₃ solution
• Pecchini process using a solution of citric acid and ethylene glycol
• combustion process using urea
• spray-drying of the dispersed starting materials
• spray pyrolysis of the dispersed starting materials.

5. Process according to Claim 4, **characterised in that** the wet-chemical preparation of the phosphor precursors is carried out by means of coprecipitation with an NH₄HCO₃ solution.

6. Process according to one or more of Claims 2 to 5, **characterised in that** the coating with at least one metal oxide, transition-metal oxide or semimetal oxide is carried out by means of addition of aqueous or non-aqueous solutions of non-volatile salts and/or organometallic compounds.

7. Process according to one or more of Claims 2 to 6, **characterised in that** the starting materials and the dopant are inorganic and/or organic substances, such as nitrates, carbonates, hydrogencarbonates, phosphates, carboxylates, alcoholates, acetates, oxalates, halides, sulfates, organometallic compounds, hydroxides and/or oxides of the metals, semimetals, transition metals and/or rare earths, which are dissolved and/or suspended in inorganic and/or organic liquids.

8. Lighting unit having at least one primary light source whose emission maximum is in the range 380 nm to 530 nm, preferably between 430 nm and 500 nm, where some or all of this radiation is converted into longerwavelength radiation by coated phosphor particles according to Claim 1.

9. Lighting unit according to Claim 8, **characterised in that** the light source is a luminescent indium aluminium gallium nitride, in particular of the formula InⱼGaⱼAlₖN, where 0 ≤ i, 0 ≤ j, 0 ≤ k, and i+j+k=1.

10. Lighting unit according to Claim 8, **characterised in that** the light source is a luminescent compound based on ZnO, TCO (transparent conducting oxide), ZnSe or SiC.

11. Lighting unit according to Claim 8, **characterised in that** the light source is a material based on an organic light-emitting layer.

12. Lighting unit according to Claim 8, **characterised in that** the light source is a source which exhibits electroluminescence and/or photoluminescence.

13. Lighting unit according to Claim 8, **characterised in that** the light source is a plasma or discharge source.

14. Use of coated phosphor particles according to Claim 1 for the partial or complete conversion of the blue or near-UV emission from a luminescent diode.

## Revendications

1. Particules de phosphore revêtues comprenant des particules luminescentes qui sont constituées par au moins un composé luminescent choisi parmi le groupe comprenant (Y,Gd,Lu,Sc,Sm,Tb)₃(Al,Ga)₅O₁₂:Ce (avec ou sans Pr), YSiO₂N:Ce, Y₂Si₃O₃N₄:Ce, Gd₂Si₃O₃N₄:Ce, (Y,Gd,Tb,Lu)₃Al₅₋ₓSiₓO₁₂₋ₓNₓ:Ce, BaMgAl₁₀O₁₇:Eu (avec ou sans Mn), SrAl₂O₄:Eu, Sr₄Al₁₄O₂₅:Eu, (Ca,Sr,Ba)Si₂N₂O₂:Eu, SrSiAl₂O₃N₂:Eu, (Ca,Sr,Ba)₂Si₅N₈:Eu, (Ca,Sr,Ba)SiN₂:Eu, CaAlSiN₃:Eu, des molybdates, des tungstates, des vanadates, dans chaque cas à titre individuel ou des mélanges afférents avec un ou plusieurs ions d'activateur, tels que Ce, Eu, Mn, Cr, Tb et/ou Bi, et au moins un revêtement pris parmi oxyde d'aluminium, oxyde de zirconium, oxyde de zinc, dioxyde de titane et/ou dioxyde de silicium comportant une surface poreuse comprenant des mésopores et/ou des macropores, où les mésopores présentent une ouverture de pore entre 2 et 50 nm et les macropores présentent une ouverture de pore > 50 nm.

2. Procédé pour la fabrication de particules de phosphore revêtues selon la revendication 1, **caractérisé par** les étapes consistant à :
a. préparer une suspension de précurseur de phosphore précalcinée en mélangeant au moins deux matériaux de départ et au moins un dopant au moyen de méthodes sol-gel ou de précipitation, où le traitement thermique est mis en oeuvre à une température T₁ > 150°C ;
b. revêtir la suspension de précurseur de phosphore précalcinée avec un oxyde de métal, un oxyde de métal de transition ou un oxyde de semi-métal sensiblement transparent selon un procédé chimique par voie humide à une température élevée puis soumettre ensuite la suspension revêtue à une calcination à une température T₂ > 800°C ;
c. additionnellement et en option, soumettre à une oxydation sélective des sous-oxydes à une température T₃ < 800°C afin d'obtenir les oxydes de métal ou les oxydes de semi-métal correspondants.

3. Procédé selon la revendication 2, **caractérisé en ce que** l'oxyde de métal, l'oxyde de métal de transition ou l'oxyde de semi-métal sensiblement transparent utilisé est constitué par des nanoparticules d'oxyde d'aluminium.

4. Procédé selon la revendication 2 et/ou 3, **caractérisé en ce que** la préparation chimique par voie humide des précurseurs de phosphore est choisie en tant que méthode prise parmi les 5 méthodes qui suivent :
• coprécipitation avec une solution de NH₄HCO₃
• procédé de Pecchini utilisant une solution d'acide citrique et éthylène glycol
• procédé de combustion utilisant de l'urée
• séchage par pulvérisation des matériaux de départ dispersés
• pyrolyse par pulvérisation des matériaux de départ dispersés.

5. Procédé selon la revendication 4, **caractérisé en ce que** la préparation chimique par voie humide des précurseurs de phosphore est mise en oeuvre au moyen d'une coprécipitation avec une solution de NH₄HCO₃.

6. Procédé selon une ou plusieurs des revendications 2 à 5, **caractérisé en ce que** le revêtement avec au moins un oxyde pris parmi un oxyde de métal, un oxyde de métal de transition et un oxyde de semi-métal est mis en oeuvre au moyen de l'ajout de solutions aqueuses ou non aqueuses de sels non volatiles et/ou de composés organométalliques.

7. Procédé selon une ou plusieurs des revendications 2 à 6, **caractérisé en ce que** les matériaux de départ et le dopant sont des substances inorganiques et/ou organiques telles que des nitrates, des carbonates, des carbonates d'hydrogène, des phosphates, des carboxylates, des alcoolates, des acétates, des oxalates, des halogénures, des sulfates, des composés organométalliques, des hydroxydes et/ou des oxydes des métaux, des semi-métaux, des métaux de transition et/ou des terres rares, lesquels sont dissous et/ou suspendus dans des liquides inorganiques et/ou organiques.

8. Unité d'éclairage comportant au moins une source de lumière primaire dont le maximum d'émission est dans la plage de 380 nm à 530 nm, de façon préférable entre 430 nm et 500 nm, où une certaine part ou la totalité de ce rayonnement est convertie selon un rayonnement de longueur d'onde plus longue par des particules de phosphore revêtues selon la revendication 1.

9. Unité d'éclairage selon la revendication 8, **caractérisée en ce que** la source de lumière est du nitrure d'indium aluminium gallium luminescent, en particulier de la formule InᵢGaⱼAlₖN, où 0 ≤ i, 0 ≤ j, 0 ≤ k, et i+j+k=1.

10. Unité d'éclairage selon la revendication 8, **caractérisée en ce que** la source de lumière est un composé luminescent à base de ZnO, de TCO (oxyde conducteur transparent), de ZnSe ou de SiC.

11. Unité d'éclairage selon la revendication 8, **caractérisée en ce que** la source de lumière est un matériau à base d'une couche d'émission de lumière organique.

12. Unité d'éclairage selon la revendication 8, **caractérisée en ce que** la source de lumière est une source qui présente une électroluminescence et/ou une photoluminescence.

13. Unité d'éclairage selon la revendication 8, **caractérisée en ce que** la source de lumière est une source plasma ou à décharge.

14. Utilisation de particules de phosphore revêtues selon la revendication 1 pour la conversion partielle ou complète de l'émission de bleu ou des UV proches en provenance d'une diode luminescente.
